# EUROPEAN PATENT SPECIFICATION

(11) **EP 3 339 894 B1**
(45) Date of publication and mention of the grant of the patent: **05.11.2025**
(21) Application number: 17181041.9
(22) Date of filing: 12.07.2017
(51) Int. Cl.: G01S 13/34, G01S 13/42, G01S 7/35

(54) **A MULTIPLE INPUT MULTIPLE OUTPUT, MIMO, RADAR SYSTEM**
MIMO-RADARSYSTEM
SYSTÈME RADAR À ENTRÉES ET SORTIES MULTIPLES (MIMO)

(30) Priority: 22.12.2016 IN 201641043912
(43) Date of publication of application: 27.06.2018
(73) Proprietor: Airbus Defence and Space GmbH, 82024 Taufkirchen (DE)
(72) Inventor: SANTRA, Avik, 712258 Hooghly, West Bengal (IN); GANIS, Alexander Rudolf, 80469 Munich (DE); ZIEGLER, Volker, 85662 Hohenbrunn (DE)
(74) Representative: Isarpatent

(56) References cited:
- US-A1- 2016 061 947
- US-A1- 2016 131 752
- US-B2- 8 390 507
- GANIS ALEXANDER ET AL: "A system concept for a 3D real-time OFDM MIMO radar for flying platforms", 2016 GERMAN MICROWAVE CONFERENCE (GEMIC), INSTITUT F�R MIKROWELLEN UND ANTENNENTECHNIK - IMA, 14 March 2016 (2016-03-14), pages 201 - 204, XP032896968, DOI: 10.1109/GEMIC.2016.7461590
- ALEXANDER R GANIS ET AL: "Real-Time Channel Sounding for Channel-Adaptive Data Links", EUROPEAN TELEMETRY AND TEST CONFERENCE, vol. 24, 5 June 2014 (2014-06-05), pages 24 - 29, XP055454357, DOI: 10.5162/etc2014/2.1
- WERNER WIESBECK: "System Concepts for the Radar of the Future", 6 March 2014 (2014-03-06), XP055451805, Retrieved from the Internet <URL:http://www.comelec.telecom-paristech.fr/uploads/tx_dbcomelec/Wiesbeck_radar_06_03_2014_01.pdf> [retrieved on 20180216]
- "RADAR TECHNOLOGY ENCYCLOPEDIA.", 1 January 1997, BOSTON, MA : ARTECH HOUSE., US, ISBN: 978-0-89006-893-9, article BARTON DAVID K ET AL: "matched filter", pages: 191 - 191, XP093212129

## Description

The invention relates to a multiple input multiple output, MIMO, radar system providing target parameters of a target.

In a multiple input multiple output, MIMO, radar system, orthogonal/non-overlapping signals are transmitted from different transmit antennas of a multiple input multiple output, MIMO, antenna array to leverage spatial diversity. The orthogonality between various transmit waveforms can be achieved either through time division multiplexing, through use of orthogonal waveforms or through frequency division multiplexing. The use of orthogonal non-overlapping transmit signals ensures that the received signals are uncorrelated to each other.

Alexander Ganis et al.: "A system concept for a 3D real-time OFDM MIMO radar for flying platforms", German Microwave Conference (GEMIC 2016), 14 March 2016, pages 201-204, XP032896968, DOI: 10.1109/GEMIC.201 6.7461590, in conjunction with Alexander Ganis et al.: "Real-Time Channel Sounding for Channel-Adaptive Data Links", European Telemetry and Test Conference, vol. 24, 5 June 2014, pages 24-29, XP055454357, DOI: 10.5162/ etc2014/2.1, describe a real-time imaging radar system for flying platforms. The proposed solution is based on the MIMO radar architecture, orthogonal signals for simultaneous transmit capabilities and highly integrated SiGe chip-sets. Using beamforming techniques at the receiver together with radar processing techniques, a 3D sensing of the range, azimuth, elevation and Doppler information for an arbitrary number of objects can be estimated through a simultaneous transmission and with real-time hardware implementable FFT processing techniques. The proposed solution uses sounding technique works with frequency modulated continuous wave (FMCW) signal (chirps), which exhibit a linear frequency decrease over time. More precisely, the technique relies on the transmission of a periodically repeated complex chirp signal. Demodulation is done through matched filtering (frequency mixing) with an inverted complex chirp as reference signal.

Werner Wiesbeck: "System Concepts for the Radar of the Future", 6 March 2014, http://www.comelec.telecom-paris-tech.fr/uploads/tx_dbcomelec/Wiesbeck_radar_06_03_2014_01.pdf , XP055451805, discusses a MIMO radar with 4D processing.

US 8 390 507 B2 describes that a radar system transmits signals for recording the environment of a motor vehicle, and the signals are reflected back from objects in the environment. Received signals are acquired from different combinations of transmitter and receiver antennas of the system. With regard to a series of such antenna combinations having their respective phase centers ordered in a spatial direction R, the positions of the phase centers of the combinations vary periodically with the period length P in a spatial direction S that runs perpendicular to the spatial direction R. Signal processing circuitry makes conclusions about the position of an object in the spatial direction S, based on an evaluation that the received signals from the object have a phase portion that alternates with the period length P over the antenna combinations ordered as set forth above, depending on the angular position of the object in the spatial direction S.

US 2016/131752 A1 describes a method for detecting an object using radar system having M transmit antennas, N receive antennas, and a processor, including: receiving, by the processor, N×M digital signals, wherein the N receivers receive M received signals corresponding to M sequences of encoded transmitted signals resulting in N×M digital signals; processing the N×M digital signals to produce N×M first range/relative velocity matrices; applying a phase compensation to N×(M-1) first range/relative velocity matrices to compensate for a difference in range between the N×(M-1) first range/relative velocity matrices and the Mth range/velocity matrix; decoding the M phase compensated range/relative velocity matrices for the N receivers using an inverse of the transmit encoding to produce M decoded phase range/relative velocity matrices for the N receivers; detecting objects using the M range/relative velocity matrices for the N receivers to produce a detection vector.

US 2016/061947 A1 describes a frequency modulated continuous wave (FMCW) radar system that includes a transceiver coupled to an analog to digital converter (ADC), and a digital signal processor (DSP) coupled to the ADC. The transceiver is configured to transmit a plurality of FMCW chirps, receive a plurality of reflected FMCW chirps, and mix the reflected FMCW chirps with at least one of the FMCW chirps to generate a plurality of beat signals. The reflected FMCW chirps are the FMCW chirps after being reflected off of a target object. The ADC is configured to convert the beat signals into a plurality of digital chirps. The DSP is configured to receive the digital chirps and quantify a relative velocity of the target object as compared to a velocity of the FMCW radar system by removing an effect of a range to the target object from a two dimensional range Doppler processing signal.

"Matched filter" in David Barton et al. (Eds.) "Radar Technoology Encyclopedia", 1997, Artech House, ISBN: 978-0-89006-893-9, page 191, XP093212129, describes that a matched filter has a frequency response H(f) that is the complex conjugate of the received spectrum.

It is an object of the present invention to provide a multiple input multiple output, MIMO, radar system which shows a high performance and which provides target parameters of a target with minimal processing time.

This object is achieved by the subject-matter of the appended independent claims, wherein further embodiments are set out in the dependent claims.

According to a first aspect, there is provided a multiple input multiple output, MIMO, radar system comprising a multiple input multiple output, MIMO, antenna array including a number of antennas adapted to transmit radar signals supplied by transmitters and a number of receive antennas adapted to receive radar signals supplied to receivers and comprising a digital unit adapted to perform in the frequency domain a frame-based complex multiplication of the received complex signal and the conjugate of the complex transmit signal to extract transmit waveforms from different transmit antennas at each receiver to generate a four-dimensional radar signal matrix to which a four-dimensional Fast Fourier Transformation, FFT, radar signal processing is applied to calculate target parameters of a target.

An advantage of the multiple input multiple output, MIMO, radar system resides in that with regard to its receiver processing it has the ability to operate in the presence of any orthogonal coded waveform architecture chosen for the transmission of radar signals. These waveforms through said orthogonality properties ensure separability using all time and frequency resources of the system.

A further advantage in the processing performed by the digital processing unit of the multiple input multiple output, MIMO, radar system according to the first aspect of the invention lies in the fact that a frame-based complex frequency multiplication can be easily implemented.

A further advantage of the multiple input multiple output, MIMO, radar system according to the first aspect of the present invention is the implementation of a four-dimensional Fast Fourier Transform, FFT, processing on a four-dimensional radar signal matrix representative of the virtual array architecture of the MIMO radar system. Accordingly, the estimation of all the targets' information and target parameters can be achieved in a joint operation. This means that for an arbitrary number of targets, the range, azimuth, elevation and Doppler (speed) information can be extracted with an operation consisting of four-dimensional FFT operations. Consequently, the hardware resources required for the operation and the computation time can be greatly reduced. Moreover, because of the use of standard FFT operation, standard hardware components such as FPGA can be used which are more real-time capable.

Further, by applying the four-dimensional FFT operation, integration of received radar data across subcarriers, symbols, azimuth angle and elevation angle for determination of the target parameters does effectively increase the signal to noise ratio of the target and consequently enables a better estimation and/or detection of target parameters along different dimensions of the four-dimensional matrix.

In a possible embodiment of the multiple input multiple output, MIMO, radar system according to the first aspect of the present invention, the target parameters comprise a range, an azimuth angle, an elevation angle and a speed of the target reflecting the radar signals transmitted by the transmit antennas of the MIMO antenna array.

The digital unit comprises a multiplication unit adapted to perform in the frequency domain the frame-based complex multiplication of the received complex signal and the conjugate of the complex transmit signal for each receiver to generate the four-dimensional radar signal matrix and a 4D Fast Fourier Transformation FFT signal processing unit adapted to performs the four dimensional FFT radar signal processing.

In a further possible embodiment of the multiple input multiple output, MIMO, radar system according to the first aspect of the present invention, the digital unit comprises a transmit bitstream generation unit adapted to generate a transmit bitstream comprising a number, N, of data samples and comprising
an orthogonal signal creation block adapted to generate a number, N_{TX}, of orthogonal waveforms for the transmit antennas of the MIMO antenna array using a direct spread spectrum DSS coding scheme, a Space Time ST coding scheme or a DFT discrete fourier transform coding scheme.

In a further possible embodiment of the multiple input multiple output, MIMO, radar system according to the first aspect of the present invention, the transmit bitstream generation unit is adapted to generate a linear frequency modulated, LFM, chirp signal.

In a still further possible embodiment of the multiple input multiple output, MIMO, radar system according to the first aspect of the present invention, the 4D FFT signal processing unit comprises an alignment unit adapted to align radar signals of the four-dimensional FFT radar signal matrix to a virtual array.

In a still further possible embodiment of the multiple input multiple output, MIMO, radar system according to the first aspect of the present invention, the 4D FFT signal processing unit comprises an interpolation unit adapted to replace null-elements of the virtual array with interpolated values along at least one dimension of the four-dimensional FFT radar signal matrix.

In a still further possible embodiment of the multiple input multiple output, MIMO, radar system according to the first aspect of the present invention, the 4D FFT signal processing unit comprises a windowing unit adapted to apply a window function to the radar signal matrix along at least one dimension of the four-dimensional radar signal matrix.

In a still further possible embodiment of the multiple input multiple output, MIMO, radar system according to the first aspect of the present invention, the 4D FFT signal processing unit comprises a padding unit adapted to perform zero padding along at least one dimension of the four-dimensional radar signal matrix with a padding factor.

In a still further possible embodiment of the multiple input multiple output, MIMO, radar system according to the first aspect of the present invention, the 4D FFT signal processing unit comprises a Fast Fourier Transformation, FFT, calculation unit adapted to perform a four-dimensional Fast Fourier Transformation along each dimension of the four-dimensional radar signal matrix to provide a four-dimensional data matrix containing target parameter estimates of the target parameters.

In a still further possible embodiment of the multiple input multiple output, MIMO, radar system according to the first aspect of the present invention, the 4D FFT signal processing unit further comprises a shift and scaling unit adapted to shift and scale the four-dimensional data matrix to centralize and scale the data.

In a still further possible embodiment of the multiple input multiple output, MIMO, radar system according to the first aspect of the present invention, the 4D FFT signal processing unit comprises a target identification unit adapted to perform a peak identification and thresholding of the target parameter estimates of the four-dimensional data matrix along at least one dimension of the four-dimensional data matrix to provide a target parameter of a target comprising a range, an azimuth angle, an elevation angle and/or a speed of the respective target.

The invention further provides according to a further aspect a method for providing at least one target parameter of a target comprising the features of claim 13.

The invention provides according to the second aspect a method for providing at least one target parameter of a target comprising the steps of:
transmitting radar signals supplied by transmitters by transmit antennas of a multiple input multiple output, MIMO, antenna array and receiving radar signals by receive antennas of the multiple input multiple output, MIMO, antenna array supplied to receivers;
performing a frame-based complex multiplication of the received complex signal and the conjugate of the transmit signal in the frequency domain to extract transmit waveforms from different transmit antennas at each receiver to generate a four-dimensional radar signal matrix; and
performing a four-dimensional Fast Fourier Transformation radar signal processing of the generated four-dimensional radar signal matrix to calculate target parameters of the target.

In an embodiment, the target parameters comprise a range, an azimuth angle, an elevation angle and a speed of the target reflecting the radar signals transmitted by the transmit antennas of the multiple input multiple output, MIMO, antenna array.

In the following, possible embodiments of the different aspects of the present invention are described in more detail with reference to the enclosed figures.
- Fig. 1: shows a block diagram of a general multiple input multiple output, MIMO, radar system architecture implemented by the multiple input multiple output, MIMO, radar system according to the first aspect of the present invention;
- Fig. 2: shows a block diagram illustrating a possible exemplary embodiment of a multiple input multi- ple output, MIMO, radar system according to the first aspect of the present invention;
- Figs. 3A, 3B: show schematic diagrams for illustrating the operation of a multiple input multiple output, MIMO, radar system according to the present invention;
- Fig. 4: shows a flowchart of a possible exemplary embodiment of a method for providing target parameters of a target according to the second aspect of the present invention.

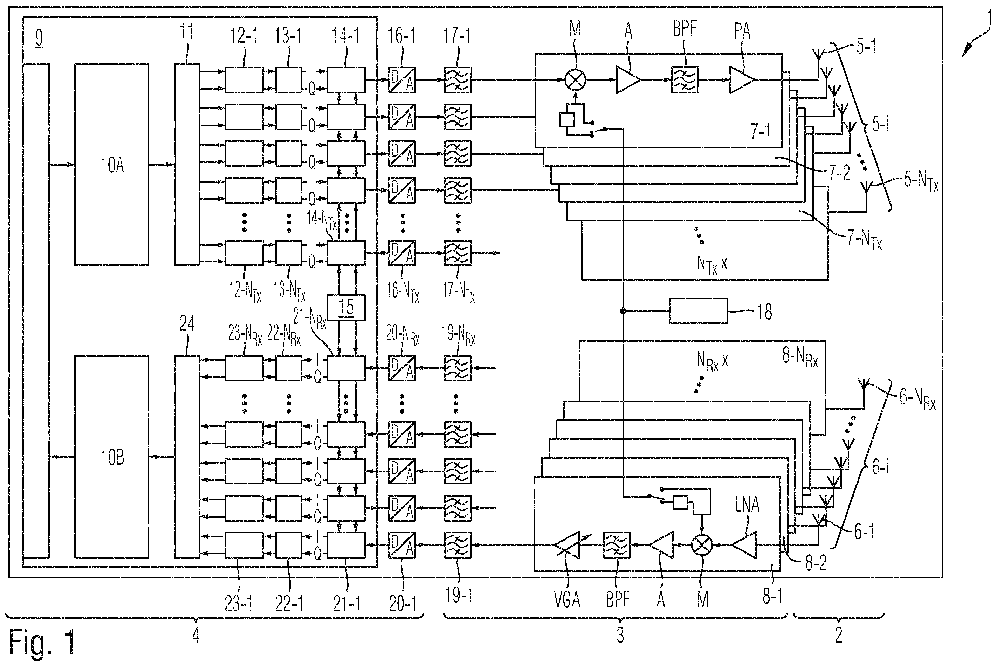

In the illustrated exemplary embodiment of the multiple input multiple output, MIMO, radar system 1 according to the first aspect of the present invention, the multiple input multiple output, MIMO, radar system 1 comprises a multiple input multiple output, MIMO, antenna array 2 connected to an RF frontend 3 of the radar system 1. The RF frontend 3 is connected to a digital unit 4 of the radar system 1. The MIMO antenna array 2 includes a number of transmit antennas adapted to transmit radar signals supplied by transmitters 5-i and a number of receive antennas 6-c adapted to receive radar signals supplied to receivers. In the illustrated embodiment of Fig. 1, the MIMO antenna array 2 comprises a number, N_{TX}, of transmit antennas and a number, N_{Rx}, of receive antennas. In a possible implementation, the multiple input multiple output, MIMO, antenna array 2 can comprise N_{TX} = 16 transmit antennas 5-i and N_{Rx} = 16 receive antennas 6-i. Each transmit antenna 5-i of the multiple input multiple output antenna array 2 is connected to a corresponding RF up-conversion unit 7-i as illustrated in Fig. 1. In a similar manner, each of the receive antennas 6-i of the multiple input multiple output, MIMO, antenna array 2 is connected to an associated RF down-conversion unit 8-i as illustrated in Fig. 1.

In the illustrated embodiment of Fig. 1, the digital unit 4 can comprises an OFDM transmit and receive unit 9 which can comprise a field programmable gate array FPGA. The OFDM transmit and receive unit 9 comprises in the illustrated implementation several subunits including a radar transmission signal generation unit 10A and a radar receive signal processing unit 10B. The radar transmission signal generation unit 10A can generate signals such as a chirp signal. The generated signal is supplied to a subcarrier mapping unit 11 performing a mapping to different subcarriers. A corresponding number of separate IFFT units 12-i, cyclic prefix units 13-i and vector modulators 14-i is provided in the OFDM transmit and receive unit 9 as shown in Fig. 1. The parallel vector modulators 14-i are connected to a numerically controlled oscillator NCO 15. The transmit signal path does comprises digital to analog converters 16-i as shown in Fig. 1. The digital to analog converters 16-i are followed by bandpass filter 17-i. The output signal of each bandpass filters 17-i is supplied to an associated up-conversion unit 7-i as illustrated in Fig. 1.

Each up-conversion unit 7-i comprises a mixer M followed by an amplifier A, a bandpass filter BPF and a power amplifier PA. The mixer M of the up-conversion unit 7-i can be switched to a phase-locked loop, PLL, frequency synthesizer 18 of the radar system 1 as illustrated in Fig. 1. The radar system 1 can comprise in a possible implementation transmit antennas 5-i for transmission of radar signals with a 50 MHz bandwidth.

The radar system 1 comprises in the illustrated implementation of Fig. 1 a number N_{Rx} of receive antennas 6-i adapted to receive radar signals for instance with a 50 MHz bandwidth. Each receive antenna 6-i of the multiple input multiple output, MIMO, antenna array 2 is connected to an associated RF down-conversion unit 8-i as shown in Fig. 1. Each RF down-conversion unit 8-i comprises in the illustrated embodiment an LNA (Low Noise Amplifier), a mixer or multiplier M, an amplifier A followed by a bandpass filter BPF and an adaptive VGA. The multiplier M of the RF conversion unit 8-i can be switched to the phase-locked loop, PLL, frequency synthesizer 18 of the radar system 1. Each of the RF down-conversion units 8-i is followed within the receive signal path of the radar system by an associated bandpass filter 19-i and an associated digital-to-analog converter 20-i. Accordingly, the receive signal path of the radar system illustrated in Fig. 1 comprises 16 channels. For each channel, a vector demodulator 21-i is provided being connected to the numerically controlled oscillator 15. The IQ output signals of the vector demodulators 21-i are supplied to associated inverse cyclic prefix units 22-i, each followed by an FFT unit 23-i as shown in Fig. 1. The output of all 16 FFT units 23-i are supplied to a subcarrier de-mapping unit 24. The subcarrier de-mapping unit 24 provides an output signal which is supplied to the radar signal processing unit 10B.

The radar signals transmitted by the transmit antennas 5-i of the MIMO antenna array 2 can be reflected by a target object wherein the reflected signals are received by the receive antenna 6-i of the MIMO antenna array 2. The digital unit 4 can be implemented by an FPGA. The digital unit 4 is provided for generation of radar signals, the acquisition of radar signals, the extraction of the transmit signal components at each receiver and can also be used for beamforming for target estimation.

The RF frontend 3 of the radar system 1 encompasses several transmitter and receiver signal paths and antennas. Each of them is responsible for coherent frequency transformation of the multiple baseband signals to the radar's frequency bands, linear amplification and filtering and coherent transmission of the transmit signal at dedicated phase points (antennas). Due to geometrical properties of the MIMO radar architecture as illustrated in Fig. 1, the received signals from different transmitters can be combined in such a manner that virtual radiating elements can be generated (virtual array).

In a possible embodiment, considering frequency division multiplexing OFDM signals can be used as radar signals where their composition from a multitude of orthogonal subcarriers make them particularly suitable for real-time multiple input multiple output, MIMO, radar applications. The orthogonality ensures a linear separation of the transmit waveforms from different transmit antennas at any of the receive antennas of the multiple input multiple output, MIMO, antenna array 2. Accordingly, the whole target scenery of the radar system 1 can be processed in one run. Compared to a time multiplexed MIMO radar system which has to operate their transmitters sequentially this forms an advantage of an OFDM MIMO radar system implemented by the present invention regarding real-time performance. Since in the radar system 1 according to the present invention, all subcarriers of an OFDM radar frame can be used simultaneously across different transmit antenna elements the energy utilization can be increased compared to conventional radar systems. The received radar signals are stronger and the resulting signal to noise ration SNR of the signals reflected from targets is increased. Accordingly, the identification of possible targets can be optimized.

In the multiple input multiple output, MIMO, radar system 1 according to the present invention, the transmit waveforms from different transmit antennas are separated at every receiver by means of a frame-based complex multiplication in the frequency domain between the received complex signal and the conjugate of the original complex transmit signal. Moreover, the sensing of the targets, range, azimuth, elevation and Doppler information can be performed with a four-dimensional Fast Fourier Transform FFT along different dimensions of a four-dimensional data matrix 4D-DM.

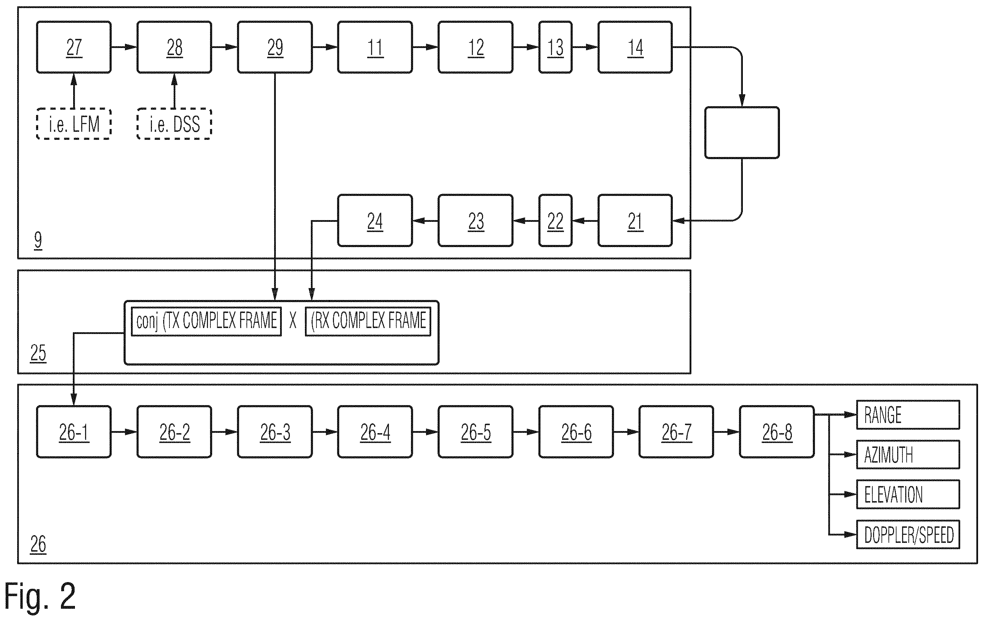

Fig. 2 shows a possible exemplary embodiment of a MIMO radar system 1 according to the first aspect of the present invention. The digital core formed by the OFDM transmit and receive unit 9 of the architecture illustrated in Fig. 1 is extended. The digital core comprises in the illustrated embodiment a calculation unit 25 adapted to perform a frame-based complex multiplication in the frequency domain and a 4D FFT processing unit 26 adapted to perform 4D-FFT radar signal processing. The digital unit 4 of the radar system 1 accordingly comprises in a possible embodiment the OFDM transmit and receive unit 9, a multiplication unit 25 for performing the frame-based complex multiplication and a 4D FFT-signal processing unit 26 for performing four-dimensional FFT radar signal processing. The multiplication unit 25 of the radar system 1 is adapted to perform a frame-based complex multiplication of the received complex signal and the conjugate of the complex transmit signal in the frequency domain to extract transmit waveforms from different transmit antennas at each receiver to generate a four-dimensional radar signal matrix 4D-RSM using the multiplication unit 25 and to apply a four-dimensional FFT radar signal processing to the calculated four-dimensional matrix 4D-RSM to calculate target parameters of a target. These target parameters can comprise a range, an azimuth angle, an elevation angle and a speed of the target reflecting the radar signals transmitted by the transmit antennas 5-i of the MIMO antenna array **2.** The multiplication unit 25 is adapted to perform in the frequency domain the frame-based complex multiplication of the received complex signal frame and the conjugate of the complex transmit signal frame for each receiver to generate the four-dimensional radar signal matrix 4D-RSM which can be stored temporarily in a data memory 26-1 of the 4D-FFT radar signal processing unit 26.

The OFDM transmit and receive unit 9 comprises in the illustrated embodiment a OFDM radar transmit signal generation unit 10A comprising a transmit bitstream generation unit 27 and an orthogonal signal creation block 28. The transmit bitstream generation unit 27 is adapted to generate a transmit bitstream comprising a number, N, of data samples. The orthogonal signal creation block 28 is adapted to generate a number of orthogonal waveforms for the transmit antennas 5-i of the MIMO antenna array 2. In a possible embodiment, the transmit bitstream generation unit 27 is adapted to generate a linear frequency modulated, LFM, chirp signal. In a possible embodiment, the linear frequency modulated, LFM, chirp signals are of length L corresponding to the number of subcarriers utilized in the OFDM frame. The orthogonal signal creation block 28 creates orthogonal wave forms by means of various type of coding, in particular by using a direct spread spectrum (DSS) coding scheme, ST coding scheme 27 or DFT coding scheme. The orthogonal signal creation block 28 applies orthogonality principles to the generated bitstream. This can be represented as a direct spread spectrum (DSS) approach applied at a symbol level with a Walsh-Hadamard code proportional to M being the number of symbols present in the OFDM frame. The result of these operations is the generation of N_{TX} orthogonal waveforms, wherein N_{TX} represents the number of transmit antenna elements 5-i in the MIMO antenna array 2. Each generated orthogonal waveforms comprises MXN data samples wherein M is the number of symbols present in a frame such as an OFDM frame. The N_{TX} orthogonal waveforms are assigned by an antenna mapping unit 29 to different transmit antennas 5-i. The antenna mapping unit 29 forms part of the OFDM transmit and receiver processing unit 9 as illustrated in Fig. 2. The antenna mapping unit 29 can be implemented before the subcarrier mapping unit 11 as shown in Fig. 2. Each of the N_{TX} orthogonal waveforms or frames consists of N_{TX} x M samples. The following operations or procedures comprise a subcarrier mapping performed by the subcarrier mapping unit 11 followed by an IFFT processing, a cyclic prefix (CP) attachment and a vector modulation before the signals are passed to the D/A converters 16-i and supplied to the RF frontend 3 of the radar system 1. Analog signals are sent through the RF frontend 3 which is adapted to convert frequency baseband signals from the digital units and AD/DA converters into the selected RF radar frequency band and to supply the signals finally to the transmit antennas 5-i of the MIMO antenna array 2. The received radar signals are reconstructed by corresponding operations which include vector demodulation, cyclic prefix (CP) extraction, FFT processing, subcarrier de-mapping to extract the transmit signal components. The antenna mapping unit 29 supplies in the frequency domain to the multiplication unit 25 the mapped complex transmit signals and the subcarrier de-mapping unit 24 supplies in the frequency domain the complex received signal to the multiplication unit 25. The multiplication unit 25 is adapted to multiply the complex received signal and a conjugate of the complex transmit signal received from the antenna mapping unit 29 in a frame-based complex multiplication in the frequency domain to extract transmit waveforms from different transmit antennas at each receiver to generate the four-dimensional radar signal matrix 4D-RSM. The transmit waveforms from different transmit antennas are separated at every receiver by means of the frame-based complex multiplication in the frequency domain between the received complex signal and the conjugate of the original complex transmit signal. The orthogonal waveforms created by the orthogonal signal creation block 29 remain orthogonal at the receiver though a correlation objection achieved in the frequency domain via a complex symbol or frame lock multiplication. An advantage of this kind of correlation-based processing is that it can be easily applied to any kind of orthogonal coded transmitted waveform architecture and can be easily implemented by hardware components. The created radar signal matrix RSM is a four-dimensional matrix with a size N_{TX} x N_{RX} x N x M, wherein N_{TX} is the number of transmit antennas 5-i, N_{RX} is the number of receive antennas 6-i, N is the number of carriers and M is the number of symbols. The generated four-dimensional radar signal matrix 4D-RSM can be written into a memory 26-1 of the 4D-FFT processing unit 26 for further processing.

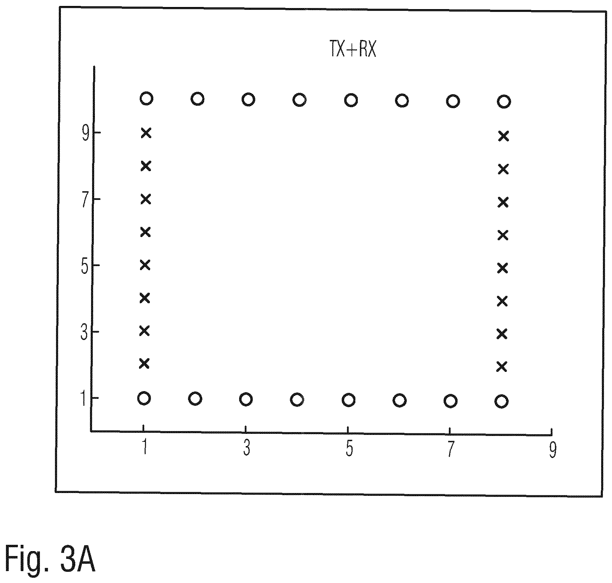

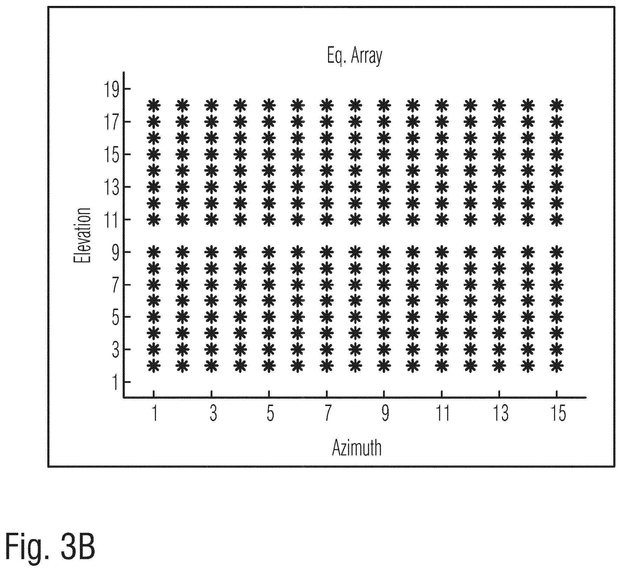

The 4D-FFT radar signal processing unit 26 comprises in the illustrated embodiment an alignment processing unit 26-2 adapted to align radar signals of the 4D-FFT radar signal matrix 4D-RSM to a virtual array. The radar signals are aligned according to the virtual array. Figs. 3A, 3B illustrate a virtual antenna array configuration (Fig. 3B). As can be seen from Figs. 3A, 3B due to geometrical properties of the MIMO radar system 1, received radar signals from different transmitters are combined in such a manner that virtual radiating elements can be generated (virtual array). An equivalent virtual array as illustrated in Fig. 3B can be calculated as the discrete convolution of the overall RX element positions and TX element positions (see Fig. 3A). Thus, the number of virtual elements is N_{RX} x N_{TX}. The stars illustrated in Fig. 3B represent double elements. An empty row can also be seen in Fig. 3B, for elements with a vertical (elevation) number 10. These elements represent zeros in the matrix or holes in the virtual array.

Accordingly, the size of the four-dimensional data matrix scales according to the virtual array size wherein the horizontal axis can be denoted as azimuth and the vertical axis can be denoted as elevation. This yields a four-dimensional radar signal matrix 4D-RSM with a size N_{ELE} x N_{AZI} x N x M, wherein N_{ELE} and N_{AZI} are the number of virtual elements in the vertical/elevation and horizontal/azimuth axis, respectively. Accordingly, each element in Figs. 3A, 3B effectively represents an N x M OFDM frame or signal waveform.

As illustrated in the embodiment of Fig. 2, the 4D-FFT radar signal processing unit 26 further comprises an interpolation unit 26-3. The interpolation unit 26-3 is adapted to replace null-elements of the virtual array with interpolated values along at least one dimension of the four-dimensional radar signal matrix 4D-RSM. The interpolation unit 26-3 performs interpolation of the missing (or zero) elements which might be required or not according to the chosen antenna array configuration and resulting virtual array. For example, for the frames with elevation number 10 in the matrix (see Fig. 3B), interpolation is required in order to create the missing frames. In a possible implementation, the interpolation can be performed by an averaging operation between frames with elevation number 9 and 11 and by replacing the zeros in the four-dimensional radar signal matrix.

In a further possible embodiment, the 4D-FFT radar signal processing unit 26 comprises a windowing unit 26-4 adapted to apply a window function to the radar signal matrix along at least one dimension of the four-dimensional radar signal matrix.

In a further possible embodiment of the 4D-FFT radar signal processing unit 26, a padding unit 26-5 is provided. The padding unit increases points by a padding factor along at least one dimension of the four-dimensional radar signal matrix 4D-RSM. The padding unit 26-5 is adapted to perform zero-padding along at least one dimension of the four-dimensional radar signal matrix with a padding factor. Zero-padding allows to use a longer FFT after the padding which will produce a longer FFT result matrix. The longer FFT result comprises more frequency bins that are more closely spaced in frequency. This can result in a smoother spectrum when plotted without further interpolation. Although the interpolation does not improve the resolution it facilitates to visually resolve a peak of a signal isolated frequency that does not comprise any significant adjacent signals or noise in the spectrum. Statistically, a higher density of FFT result bins makes it more likely that a peak magnitude bin is closer to the frequency of a random isolated input frequency sinusoid, and without further interpolation. Thus, essentially, zero-padding as performed by the zero-padding unit 26-5 before a DFT/FFT is a computationally efficient way of interpolating a large number of points. Zero- padding also achieves a power of two number of FFT points. When the time-domain length of a waveform is a power of two, radix-2 FFT algorithms, which are extremely efficient can be used to speed up the process and reduce the processing time. FFT algorithms implemented by FPGAs typically only work on lengths of power two. If zero-padding is applied to the signal in the time domain and a window function is used the signal has to be windowed before zero-padding is performed. If the window function is applied after zero-padding, there will be a sharp transition from the signal to zero instead of a smooth transition to zero. Accordingly, the windowing unit 26-4 is placed before the padding unit 26-5 as illustrated in Fig. 2.

After the padding operation performed by the padding unit 26-5, the size of the 4D data matrix scales according to the padding factor used by the padding unit 26-5. Consequently, a 4D data matrix of the size (N_{ELE} x pad) x (N_{RX} x pad) x (N x pad) x (M x pad) is obtained and can be used throughout the rest of the processing. For optimum performance, each dimension's length has a power of two.

The 4D-FFT radar signal processing unit 26 comprises in the illustrated embodiment an FFT calculation unit 26-6. The FFT calculation unit 26-6 is adapted to perform a 4D Fast Fourier Transformation along each dimension of the four-dimensional radar signal matrix 4D-RSM to provide a 4D data matrix 4D-DM containing target parameter estimates of the target parameters.

The 4D reconstruction of the radar scenario is done with the 4D-FFT calculation unit 26-6 on the 4D radar signal matrix 4D-RSM resulting from the previous operations. The 4D-FFT can be seen as an operation that computes in-place the one dimensional Fast Fourier Transform along each dimension of the 4D radar signal matrix 4D-RSM.

The first FFT goes along the first dimension of the 4D radar signal matrix which represents the elevation components of the virtual array and yields the elevation information of the targets.

The second FFT goes along the second dimension of the 4D radar signal matrix resulting from the operation above which represents the azimuth components of the virtual array and yields the azimuth information of the targets.

The third FFT goes along the third dimension of the 4D radar signal matrix resulting from the previous operation step which represents the carrier components and yields the range information of the targets.

The fourth FFT goes along the fourth dimension of the 4D radar signal matrix resulting from the operation in the previous step which represents the symbol components and yields the Doppler or speed information of the targets.

A complete sensing of range, azimuth, elevation and Doppler/speed of the targets can be achieved in this manner. Moreover, the compensate and integrate properties of the N-dimensional FFT can be exploited to yield better target estimates. For illustration of target range estimates, the FFT operation across the first three dimensions (symbols, azimuth angles, elevation angles) present a Doppler-compensated, azimuth-angle compensated, elevation-angle compensated received signal integrated along symbols M, along horizontal virtual elements/azimuth angles N_{AZI} and along vertical virtual elements/elevation angles N_{ELE}. This transformed data is then subsequently transformed by the final fourth FFT operation along the range dimension for a particular Doppler value, azimuth angle and elevation angle parameters. These parameters can be provided by peak identification operations along those dimensions to enable a better estimation of the target's range parameter. Equivalently, the same operations in the other dimensions can lead to a better Doppler estimation, azimuth angle, and elevation angle estimates owing to the data integration property of the FFT in their respective dimensions.

In the case of an FPGA implementation of the 4D-FFT beamforming, additional steps can be required for the operation. In a possible embodiment, after each step, the intermediate results of the FFT processing can be stored in a memory such as a SDRAM read by the next process step with a transpose operation to perform the next FFT calculation.

Accordingly, first, the first FFT operation is performed.

Then, the output is written to the memory.

Further, data is read from the memory to perform a matrix transpose. By doing this operation and considering a SDRAM memory, the memory addressing can be performed in sequential order and less overhead is obtained.

Finally, the sequence is repeated starting with the first step for the other FFT operations.

After the last steps of the 4D-FFT operations performed by the FFT processing unit 26-6, a 4D data matrix 4D-DM containing the complete sensing is obtained. An additional optional operation can be performed where the data is scaled and shifted for better and centralized plotting of the same. This is performed in a possible embodiment by a shift and scaling unit 26-7 adapted to perform a shift and scaling operation across one or more dimension in order to centralize and scale the data for plotting. It is, for example, possible to shift the zero-frequency component to the center of the array. This is useful for visualizing a Fourier transform with the zero-frequency component in the middle of the spectrum. The scaling can be performed instead by dividing the data samples with the chosen (N x pad) length of the subcarriers' dimension.

The 4D-FFT radar signal processing unit 26 further comprises a target identification unit 26-8. The target identification unit 26-8 is adapted to perform a peak identification and thresholding of the target parameter estimates of the four-dimensional data matrix 4D-DM along at least one dimension of the four-dimensional data matrix to provide a target parameter of a target. The target parameter can comprise a range, an azimuth angle, an elevation angle and/or a speed of the respective target. A peak identification and thresholding of data values along one or more dimension is performed for target identification and/or target detection. For example, a selection of targets can be performed according to a backscattered amplitude above a certain dB value, a proximity to a certain range value in meters, the presence in an angle sector in dB for both azimuth and elevation or even according to the speed of the target.

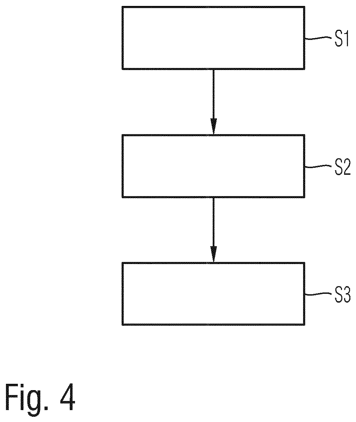

Fig. 4 shows a flowchart of a possible exemplary embodiment of a method for providing at least one target parameter of a target according to the second aspect of the present invention.

In a first step S1, radar signals supplied by transmitters by transmit antennas of a MIMO antenna array and radar signal are received by receive antennas of the MIMO antenna array and supplied to receivers.

In step S2, a frame-based complex multiplication of the received complex signal and the conjugate of the transmit signal is performed in the frequency domain to extract transmit waveforms from different transmit antennas at each receiver to generate a four-dimensional radar signal matrix 4D-RSM.

Finally, in step S3, a four-dimensional FFT radar signal processing is applied to the generated 4D radar signal matrix 4D-RSM to calculate target parameters of the target.

These target parameters comprise in a possible embodiment of the method illustrated in Fig. 4 a range, an azimuth angle, an elevation angle and a speed of the target reflecting the radar signals transmitted by the transmit antennas of the MIMO antenna array 2. The signal processing is performed in a preferred embodiment in real time. The radar system 1 according to the present invention forms a real-time multi-channel imaging radar system which can be used for different purposes. The radar system 1 can be used for obstacle warning for helicopters. Further, a radar system 1 can be used as an anti-collision system for airplanes. The radar system 1 can further be used for security imaging for hidden objects. A further use of the radar system 1 is a wide-zone and critical infrastructure surveillance system. The radar system 1 shows a high performance and can use hardware resources very efficiently to calculate target parameters of a target with minimum computation time.

### REFERENCE SIGNS

- 1: radar system
- 2: MIMO radar antenna array
- 3: RF frontend
- 4: digital unit
- 5: transmit antennas
- 6: receive antennas
- 7: up-conversion unit
- 8: down-conversion unit
- 9: OFDM transmit and receive unit
- 10A: transmit signal generation unit
- 10B: receiver signal processing unit
- 11: subcarrier mapping
- 12: IFFT unit
- 13: cyclic prefix unit
- 14: vector modulator
- 15: oscillator
- 16: digital to analog converter
- 17: bandpass filter
- 18: PLL frequency synthesizer
- 19: bandpass filter
- 20: analog to digital converter
- 21: vector demodulator
- 22: cyclic prefix extraction unit
- 23: FFT unit
- 24: subcarrier de-mapping unit
- 25: multiplication unit
- 26: 4D-FFT radar signal processing unit
- 27: transmit bitstream generation unit
- 28: orthogonal signal creation block
- 29: antenna mapping unit
- 26-1: data memory
- 26-2: alignment unit
- 26-3: interpolation unit
- 26-4: windowing unit
- 26-5: padding unit
- 26-6: FFT calculation unit
- 26-7: shift and scaling unit
- 26-8: target identification unit

## Claims

1. A multiple input multiple output, MIMO, radar system (1) comprising:
a multiple input multiple output, MIMO, antenna array (2) including a number of transmit antennas (5) adapted to transmit radar signals supplied by transmitters and a number of receive antennas (6) adapted to receive radar signals supplied to receivers,
a digital unit (4) adapted to perform in the frequency domain a frame-based complex multiplication of the complex received signal and a conjugate of the complex transmit signal to extract transmit waveforms from different transmit antennas (5) at each receiver to generate a radar signal matrix RSM, to which a FFT radar signal processing is applied to calculate target parameters of a target,
wherein the digital unit (4) comprises
- an antenna mapping unit (29) adapted to map a number of orthogonal waveforms to the number of transmit antennas (5) to obtain mapped complex transmit signals,
- a subcarrier de-mapping unit (24) adapted to provide the complex received signal in the frequency domain, and
- a multiplication unit (25) adapted to perform in the frequency domain the frame-based complex multiplication of the complex received signal and the conjugate of the complex transmit signal for each receiver to generate the RSM, written into a data memory (26-1) of a Fast Fourier Transform FFT signal processing unit (26) adapted to perform the FFT radar signal processing to calculate the target parameters of the target, wherein the antenna mapping unit (29) supplies the mapped complex transmit signals in the frequency domain to the multiplication unit (25) and wherein the subcarrier de-mapping unit (24) supplies the complex received signals in the frequency domain to the multiplication unit (25),
**characterized in that**
the radar signal matrix RSM is a four-dimensional radar signal matrix 4D-RSM with a size N_{TX} x N_{RX} x N x M, wherein N_{TX} is the number of transmit antennas (5, 5-i), N_{RX} is the number of receive antennas (6, 6-i), N is the number of subcarriers and M is the number of symbols present in a frame,
a four-dimensional FFT radar signal processing is applied to calculate target parameters of a target, and
the Fast Fourier Transform FFT signal processing unit (26) is a 4D-Fast Fourier Transform FFT signal processing unit (26).

2. The multiple input multiple output, MIMO, radar system according to claim 1 wherein the target parameters of the target comprise a range, an azimuth angle, an elevation angle and a speed of the target reflecting the radar signals transmitted by the transmit antennas (5) of the MIMO antenna array (2).

3. The multiple input multiple output, MIMO, radar system according to claim 1 or 2 wherein the digital unit (4) comprises a transmit bitstream generation unit (27) adapted to generate a transmit bitstream comprising a number, N, of data samples and
an orthogonal signal creation block (29) adapted to generate a number, N_{TX}, of orthogonal waveforms for the transmit antennas (5) of said MIMO antenna array (2) using a direct spread coding scheme, wherein each generated orthogonal waveform comprises MXN data sampler.

4. The multiple input multiple output, MIMO, radar system (1) according to claim 3 wherein the transmit bitstream generation unit (27) is adapted to generate a linear frequency modulated, LFM, chirp signal.

5. The multiple input multiple output, MIMO, radar system according to any of the preceding claims 1 to 4 wherein the 4D FFT signal processing unit (26) comprises an alignment unit (26-2) adapted to align radar signals of the four-dimensional radar signal matrix 4D-RSM stored in the data memory (26-1) to a virtual array.

6. The multiple input multiple output, MIMO, radar system according to claim 5 wherein the 4D FFT signal processing unit (26) further comprises an interpolation unit (26-3) adapted to replace null-elements of the virtual array with interpolated values along at least one dimension of the four-dimensional radar signal matrix 4D-RSM.

7. The multiple input multiple output, MIMO, radar system according to any of the preceding claims 1 to 6 wherein the 4D FFT signal processing unit (26) comprises a windowing unit (26-4) adapted to apply a window function to the radar signal matrix along at least one dimension of the four-dimensional radar signal matrix.

8. The multiple input multiple output, MIMO, radar system according to any of the proceeding claims 1 to 7 wherein the 4D FFT signal processing unit (26) comprises a padding unit (26-5) adapted to perform zero padding along at least one dimension of the four-dimensional radar signal matrix with a padding factor.

9. The multiple input multiple output, MIMO, radar system according to any of the preceding claims 1 to 8 wherein the 4D FFT signal processing unit (26) comprises a FFT calculation unit (26-6) adapted to perform a 4D Fast Fourier Transformation along each dimension of the four-dimensional radar signal matrix 4D-RSM to provide a four-dimensional data matrix 4D-DM containing target parameter estimates of the target parameters.

10. The multiple input multiple output, MIMO, radar system according to any of the preceding claims 1 to 9 wherein the 4D FFT signal processing unit (26) comprises a shift and scaling unit (26-7) adapted to shift and scale the four-dimensional data matrix 4D-DM to centralize and scale the data.

11. The multiple input multiple output, MIMO, radar system according to any of the preceding claims 1 to 10 wherein the 4D FFT signal processing unit (26) comprises a target identification unit (26-8) adapted to perform a peak identification and thresholding of the target parameter estimates of the four-dimensional data matrix 4D-DM along at least one dimension of the four-dimensional data matrix 4D-DM to provide a target parameter of a target comprising a range, an azimuth angle, an elevation angle and/or a speed of the respective target.

12. A method for providing at least one target parameter of a target comprising:
- transmitting (S1) radar signals supplied by transmitters by transmit antennas (5) of a multiple input multiple output, MIMO, antenna array (2) and receiving radar signals by receive antennas (6) of the multiple input multiple output, MIMO, antenna array (2) supplied to receivers;
- performing (S2), in a digital unit (4) comprising a multiplication unit (25), a frame-based complex multiplication of the complex received signal and the conjugate of the complex transmit signal in the frequency domain to extract transmit waveforms from different transmit antennas (5) at each receiver to generate a radar signal matrix, RSM; and
- performing (S3) a Fast Fourier Transformation radar signal processing of the generated RSM, to calculate target parameters of the target,
wherein in the frequency domain a frame-based complex multiplication of the complex received signal and the conjugate of the complex transmit signal for each receiver is performed to generate the RSM, written into a data memory (26-1) of a Fast Fourier Transform FFT signal processing unit (26) which performs the FFT radar signal processing to calculate the target parameters of the target,
wherein an antenna mapping unit (29) supplies in the frequency domain to the multiplication unit (25) the mapped complex transmit signals and wherein a subcarrier de-mapping unit (24) supplies in the frequency domain to the multiplication unit (25) the complex received signals,
**characterized by**
the radar signal matrix RSM being a four-dimensional radar signal matrix 4D-RSM with a size N_{TX} x N_{RX} x N x M, wherein N_{TX} is the number of transmit antennas (5, 5-i), N_{RX} is the number of receive antennas (6, 6-i), N is the number of subcarriers and M is the number of symbols present in a frame,
a four-dimensional FFT radar signal processing being applied to calculate target parameters of a target, and
the Fast Fourier Transform FFT signal processing unit (26) being a 4D-Fast Fourier Transform FFT signal processing unit (26).

13. The method according to claim 12 wherein the target parameters comprise a range, an azimuth angle, an elevation angle and a speed of the target reflecting the radar signals transmitted by the transmit antennas of the MIMO antenna array (2).

## Patentansprüche

1. Mehrfacheingangs-/Mehrfachausgangs-Radarsystem, MIMO-Radarsystem, (1), das Folgendes umfasst:
eine Mehrfacheingangs-/Mehrfachausgangs-Antennenanordnung, MIMO-Antennenanordnung, (2), die mehrere Sendeantennen (5), die ausgelegt sind, Radarsignale zu senden, die durch Sender zugeführt werden, und mehrere Empfangsantennen (6), die ausgelegt sind, Radarsignale zu empfangen, die zu Empfängern zugeführt werden, enthält, und
eine Digitaleinheit (4), die ausgelegt ist, in der Frequenzdomäne eine rahmenbasierte komplexe Multiplikation des komplexen Empfangssignals und einer Konjugation des komplexen Sendesignals durchzuführen, um Sendewellenformen verschiedener Sendeantennen (5) bei jedem Empfänger zu extrahieren, um eine Radarsignalmatrix RSM zu erzeugen, auf die eine FFT-Radarsignalverarbeitung angewendet wird, um Zielparameter eines Ziels zu berechnen,
wobei die Digitaleinheit (4) Folgendes umfasst:
- eine Antennenabbildungseinheit (29), die ausgelegt ist, mehrere orthogonale Wellenformen auf die mehreren Sendeantennen (5) abzubilden, um abgebildete komplexe Sendesignale zu erhalten,
- eine Unterträgerrückabbildungseinheit (24), die ausgelegt ist, das komplexe Empfangssignal in der Frequenzdomäne bereitzustellen, und
- eine Multiplikationseinheit (25), die ausgelegt ist, in der Frequenzdomäne die rahmenbasierte komplexe Multiplikation des komplexen Empfangssignals mit der Konjugation des komplexen Sendesignals für jeden Empfänger durchzuführen, um die RSM zu erzeugen, die in einen Datenspeicher (26-1) einer Signalverarbeitungseinheit für eine schnelle Fourier-Transformation FFT-Signalverarbeitungseinheit (26), die ausgelegt ist, die FFT-Radarsignalverarbeitung durchzuführen, um die Zielparameter des Ziels zu berechnen, geschrieben wird, wobei die Antennenabbildungseinheit (29) die abgebildeten komplexen Sendesignale in der Frequenzdomäne zur Multiplikationseinheit (25) zuführt und die Unterträgerrückabbildungseinheit (24) die komplexen Empfangssignale in der Frequenzdomäne zur Multiplikationseinheit (25) zuführt,
**dadurch gekennzeichnet, dass**
die Radarsignalmatrix RSM eine vierdimensionale Radarsignalmatrix 4D-RSM mit einer Größe N_{TX} x N_{RX} x N x M ist, wobei N_{TX} die Anzahl von Sendeantennen (5, 5 - i) ist, N_{RX} die Anzahl von Empfangsantennen (6, 6 - i) ist,
N die Anzahl von Unterträgern ist und M die Anzahl von Symbolen ist, die in einem Rahmen vorhanden sind,
eine vierdimensionale FFT-Radarsignalverarbeitung angewendet wird, um Zielparameter eines Ziels zu berechnen, und
die Signalverarbeitungseinheit für eine schnelle Fourier-Transformation, FFT-Signalverarbeitungseinheit, (26) eine Signalverarbeitungseinheit für eine schnelle 4D-Fourier-Transformation, 4D-FFT-Signalverarbeitungseinheit, (26) ist.

2. Mehrfacheingangs-/Mehrfachausgangs-Radarsystem,
MIMO-Radarsystem, nach Anspruch 1, wobei die Zielparameter des Ziels eine Entfernung, einen Azimutwinkel, einen Elevationswinkel und eine Geschwindigkeit des Ziels, das die Radarsignale reflektiert, die durch die Sendeantennen (5) der MIMO-Antennenanordnung (2) gesendet wurden, umfassen.

3. Mehrfacheingangs-/Mehrfachausgangs-Radarsystem,
MIMO-Radarsystem, nach Anspruch 1 oder 2, wobei die Digitaleinheit (4) Folgendes umfasst: eine Sendebitstromerzeugungseinheit (27), die ausgelegt ist, einen Sendebitstrom zu erzeugen, der eine Anzahl, N, Datenabtastwerte umfasst, und
einen Orthogonalsignalerzeugungsblock (29), der ausgelegt ist, eine Anzahl, N_{TX}, orthogonaler Wellenformen für die Sendeantennen (5) der MIMO-Antennenanordnung (2) unter Verwendung eines direkten Spreizcodierungsschemas zu erzeugen, wobei jede erzeugte orthogonale Wellenform MXN Datenabtastwerte umfasst.

4. Mehrfacheingangs-/Mehrfachausgangs-Radarsystem,
MIMO-Radarsystem, (1) nach Anspruch 3, wobei die Sendebitstromerzeugungseinheit (27) ausgelegt ist, ein linear frequenzmoduliertes Chirp-Signal, LFM-Chirp-Signal, zu erzeugen.

5. Mehrfacheingangs-/Mehrfachausgangs-Radarsystem,
MIMO-Radarsystem, nach einem der vorhergehenden Ansprüche 1 bis 4, wobei die 4D-FFT-Signalverarbeitungseinheit (26) eine Ausrichtungseinheit (26-2) umfasst, die ausgelegt ist, Radarsignale der vierdimensionalen Radarsignalmatrix 4D-RSM, die im Datenspeicher (26-1) gespeichert ist, auf eine virtuelle Anordnung auszurichten.

6. Mehrfacheingangs-/Mehrfachausgangs-Radarsystem,
MIMO-Radarsystem, nach Anspruch 5, wobei die 4D-FFT-Signalverarbeitungseinheit (26) ferner eine Interpolationseinheit (26-3) umfasst, die ausgelegt ist, Null-Elemente der virtuellen Anordnung durch interpolierte Werte entlang mindestens einer Dimension der vierdimensionalen Radarsignalmatrix 4D-RSM zu ersetzen.

7. Mehrfacheingangs-/Mehrfachausgangs-Radarsystem,
MIMO-Radarsystem, nach einem der vorhergehenden Ansprüche 1 bis 6, wobei die 4D-FFT-Signalverarbeitungseinheit (26) eine Fensterungseinheit (26-4) umfasst, die ausgelegt ist, entlang mindestens einer Dimension der vierdimensionalen Radarsignalmatrix eine Fensterfunktion auf die Radarsignalmatrix anzuwenden.

8. Mehrfacheingangs-/Mehrfachausgangs-Radarsystem,
MIMO-Radarsystem, nach einem der vorhergehenden Ansprüche 1 bis 7, wobei die 4D-FFT-Signalverarbeitungseinheit (26) eine Auffülleinheit (26-5) umfasst, die ausgelegt ist, ein Nullauffüllen entlang mindestens einer Dimension der vierdimensionalen Radarsignalmatrix mit einem Auffüllfaktor durchzuführen.

9. Mehrfacheingangs-/Mehrfachausgangs-Radarsystem,
MIMO-Radarsystem, nach einem der vorhergehenden Ansprüche 1 bis 8, wobei die 4D-FFT-Signalverarbeitungseinheit (26) eine FFT-Berechnungseinheit (26-6) umfasst, die ausgelegt ist, eine schnelle 4D-Fourier-Transformation entlang jeder Dimension der vierdimensionalen Radarsignalmatrix 4D-RSM durchzuführen, um eine vierdimensionale Datenmatrix 4D-DM bereitzustellen, die Zielparameterschätzungen der Zielparameter enthält.

10. Mehrfacheingangs-/Mehrfachausgangs-Radarsystem,
MIMO-Radarsystem, nach einem der vorhergehenden Ansprüche 1 bis 9, wobei die 4D-FFT-Signalverarbeitungseinheit (26) eine Verschiebungs- und Skalierungseinheit (26-7) umfasst, die ausgelegt ist, die vierdimensionale Datenmatrix 4D-DM zu verschieben und zu skalieren, um die Daten zu zentralisieren und zu skalieren.

11. Mehrfacheingangs-/Mehrfachausgangs-Radarsystem,
MIMO-Radarsystem, nach einem der vorhergehenden Ansprüche 1 bis 10, wobei die 4D-FFT-Signalverarbeitungseinheit (26) eine Zielidentifizierungseinheit (26-8) umfasst, die ausgelegt ist, eine Spitzenwertidentifizierung und ein Schwellenwertbegrenzen der Zielparameterschätzungen der vierdimensionalen Datenmatrix 4D-DM entlang mindestens einer Dimension der vierdimensionalen Datenmatrix 4D-DM durchzuführen, um einen Zielparameter eines Ziels bereitzustellen, der eine Entfernung, einen Azimutwinkel, einen Elevationswinkel und/oder eine Geschwindigkeit des jeweiligen Ziels umfasst.

12. Verfahren zum Bereitstellen mindestens eines Zielparameters eines Ziels, das Folgendes umfasst:
- Senden (S1) von Radarsignalen, die durch Sender zugeführt werden, durch Sendeantennen (5) einer Mehrfacheingangs-/Mehrfachausgangs-Antenne, MIMO-Antenne, (2) und Empfangen von Radarsignalen durch Empfangsantennen (6) der Mehrfacheingangs-/Mehrfachausgangs-Antennenanordnung, MIMO-Antennenanordnung, (2), die Empfängern zugeführt werden;
- Durchführen (S2) in einer Digitaleinheit (4), die eine Multiplikationseinheit (25) umfasst, einer rahmenbasierten komplexen Multiplikation des komplexen Empfangssignals und der Konjugation des komplexen Sendesignals in der Frequenzdomäne, um Sendewellenformen verschiedener Sendeantennen (5) bei jedem Empfänger zu extrahieren, um eine Radarsignalmatrix, RSM, zu erzeugen; und
- Durchführen (S3) einer Radarsignalverarbeitung mit einer schnellen Fourier-Transformation der erzeugten RSM, um Zielparameter des Ziels zu berechnen,
wobei in der Frequenzdomäne eine rahmenbasierte komplexe Multiplikation des komplexen Empfangssignals mit der Konjugation des komplexen Sendesignals für jeden Empfänger durchgeführt wird, um die RSM zu erzeugen, die in einen Datenspeicher (26-1) einer Signalverarbeitungseinheit für eine schnelle Fourier-Transformation FFT-Signalverarbeitungseinheit (26), die die FFT-Radarsignalverarbeitung durchführt, um die Zielparameter des Ziels zu berechnen, geschrieben wird, und
eine Antennenabbildungseinheit (29) die abgebildeten komplexen Sendesignale in der Frequenzdomäne zur Multiplikationseinheit (25) zuführt und eine Unterträgerrückabbildungseinheit (24) die komplexen Empfangssignale in der Frequenzdomäne zur Multiplikationseinheit (25) zuführt,
**dadurch gekennzeichnet, dass**
die Radarsignalmatrix RSM eine vierdimensionale Radarsignalmatrix 4D-RSM mit einer Größe N_{TX} x N_{RX} x N x M ist, wobei N_{TX} die Anzahl von Sendeantennen (5, 5 - i) ist, N_{RX} die Anzahl von Empfangsantennen (6, 6 - i) ist, N die Anzahl von Unterträgern ist und M ist die Anzahl von Symbolen ist, die in einem Rahmen vorhanden sind,
eine vierdimensionale FFT-Radarsignalverarbeitung, auf Berechnungszielparameter eines Ziels angewendet wird und die Signalverarbeitungseinheit für eine schnelle Fourier-Transformation, FFT-Signalverarbeitungseinheit, (26) eine Signalverarbeitungseinheit für eine schnelle 4D-Fourier-Transformation, 4D-FFT-Signalverarbeitungseinheit, (26) ist.

13. Verfahren nach Anspruch 12, wobei die Zielparameter eine Entfernung, einen Azimutwinkel, einen Elevationswinkel und eine Geschwindigkeit des Ziels, das die Radarsignale reflektiert, die durch die Sendeantennen der MIMO-Antennenanordnung (2) gesendet wurden, umfassen.

## Revendications

1. Système radar (1) MIMO à sorties multiples et entrées multiples comprenant :
un réseau d'antennes (2) MIMO à sorties multiples et entrées multiples comprenant un certain nombre d'antennes d'émission (5) adaptées pour émettre des signaux radar fournis par des émetteurs et un certain nombre d'antennes de réception (6) adaptées pour recevoir des signaux radar fournis à des récepteurs,
une unité numérique (4) adaptée pour réaliser, dans le domaine fréquentiel, une multiplication complexe à base de trames du signal reçu complexe par un conjugué du signal d'émission complexe pour extraire des formes d'ondes d'émission de différentes antennes d'émission (5) au niveau de chaque récepteur afin de générer une matrice de signaux radar RSM, à laquelle un traitement de signaux radar FFT est appliqué pour calculer des paramètres de cible d'une cible,
dans lequel l'unité numérique (4) comprend
- une unité de mappage d'antennes (29) adaptée pour mapper un certain nombre de formes d'ondes orthogonales audit nombre d'antennes d'émission (5) afin d'obtenir des signaux d'émission complexes mappés,
- une unité de démappage de sous-porteuses (24) adaptée à fournir le signal reçu complexe dans le domaine fréquentiel, et
- une unité de multiplication (25) adaptée pour réaliser dans le domaine fréquentiel la multiplication complexe à base de trames du signal reçu complexe par le conjugué du signal d'émission complexe pour chaque récepteur afin de générer le RSM, écrit dans une mémoire (26-1) de données d'une unité de traitement de signal FFT à transformée de Fourier rapide (26) adaptée pour effectuer le traitement de signal radar FFT pour calculer les paramètres de cible de la cible, dans lequel l'unité de mappage d'antennes (29) fournit les signaux d'émission complexes mappés dans le domaine fréquentiel à l'unité de multiplication (25) et dans lequel l'unité de démappage de sous-porteuse (24) fournit les signaux reçus complexes dans le domaine fréquentiel à l'unité de multiplication (25),
**caractérisé en ce que**
la matrice de signal radar RSM est une matrice de signal radar quadridimensionnelle 4D-RSM de taille N_{TX} x N_{RX} x N x M, où N_{TX} est le nombre d'antennes d'émission (5, 5-i), N_{RX} le nombre d'antennes de réception (6, 6-i), N le nombre de sous-porteuses et M le nombre de symboles présents dans une trame,
un traitement de signal radar FFT quadridimensionnel est appliqué pour calculer des paramètres de cible d'une cible, et
l'unité de traitement de signal FFT à transformée de Fourier rapide (26) est une unité de traitement de signal FFT à transformée de Fourier rapide 4D (26).

2. Système radar MIMO à entrées multiples et sorties multiples selon la revendication 1, dans lequel les paramètres de cible de la cible comprennent une distance, un angle d'azimut, un angle d'élévation et une vitesse de la cible réfléchissant les signaux radar émis par les antennes d'émission (5) du réseau d'antennes MIMO (2).

3. Système radar MIMO à sorties multiples et entrées multiples selon la revendication 1 ou 2, dans lequel l'unité numérique (4) comprend une unité de génération de train de bits d'émission (27) adaptée pour générer un train de bits d'émission comprenant un certain nombre, N, d'échantillons de données et
un bloc de création de signaux orthogonaux (29) conçu pour générer un certain nombre, N_{TX}, de formes d'ondes orthogonales pour les antennes d'émission (5) dudit réseau d'antennes MIMO (2) en utilisant un schéma de codage à étalement direct, dans lequel chaque forme d'onde orthogonale générée comprend un échantillonneur de données MXN.

4. Système radar MIMO (1) à entrées multiples et sorties multiples selon la revendication 3, dans lequel l'unité de génération de train de bits d'émission (27) est adaptée pour générer un signal chirp LFM modulé en fréquence linéaire.

5. Système radar MIMO à sorties multiples et entrées multiples selon l'une quelconque des revendications précédentes 1 à 4, dans lequel l'unité de traitement de signal FFT 4D (26) comprend une unité d'alignement (26-2) adaptée pour aligner des signaux radar de la matrice de signal radar 4D-RSM quadridimensionnelle stockée dans la mémoire de données (26-1) sur un réseau virtuel.

6. Système radar MIMO à sorties multiples et entrées multiples selon la revendication 5, dans lequel l'unité de traitement de signal FFT 4D (26) comprend en outre une unité d'interpolation (26-3) adaptée pour remplacer des éléments nuls du réseau virtuel par des valeurs interpolées le long d'au moins une dimension de la matrice de signal radar 4D-RSM quadridimensionnelle.

7. Système radar MIMO à sorties multiples et entrées multiples selon l'une quelconque des revendications précédentes 1 à 6, dans lequel l'unité de traitement de signal FFT 4D (26) comprend une unité de fenêtrage (26-4) adaptée pour appliquer une fonction de fenêtre à la matrice de signal radar le long d'au moins une dimension de la matrice de signal radar quadridimensionnelle.

8. Système radar MIMO à sorties multiples et entrées multiples selon l'une quelconque des revendications précédentes 1 à 7, dans lequel l'unité de traitement de signal FFT 4D (26) comprend une unité de remplissage (26-5) adaptée pour effectuer un remplissage de zéros le long d'au moins une dimension de la matrice de signal radar quadridimensionnelle avec un facteur de remplissage.

9. Système radar MIMO à sorties multiples et entrées multiples selon l'une quelconque des revendications précédentes 1 à 8, dans lequel l'unité de traitement de signal FFT 4D (26) comprend une unité de calcul FFT (26-6) adaptée pour effectuer une transformation de Fourier rapide 4D le long de chaque dimension de la matrice de signal radar 4D-RSM quadridimensionnelle pour fournir une matrice de données 4D-DM contenant des estimations de paramètres de cible.

10. Système radar MIMO à sorties multiples et entrées multiples selon l'une quelconque des revendications précédentes 1 à 9, dans lequel l'unité de traitement de signal FFT 4D (26) comprend une unité de décalage et de mise à l'échelle (26-7) adaptée pour décaler et mettre à l'échelle la matrice de données quadridimensionnelle 4D-DM pour centraliser et mettre à l'échelle les données.

11. Système radar MIMO à sorties multiples et entrées multiples selon l'une quelconque des revendications précédentes 1 à 10, dans lequel l'unité de traitement de signal FFT 4D (26) comprend une unité d'identification de cible (26-8) adaptée pour effectuer une identification de pic et un seuillage des estimations de paramètres de cible de la matrice de données quadridimensionnelle 4D-DM le long d'au moins une dimension de la matrice de données quadridimensionnelle 4D-DM pour fournir un paramètre de cible comprenant une distance, un angle azimut, un angle d'élévation et/ou une vitesse de la cible respective.

12. Procédé de fourniture d'au moins un paramètre de cible d'une cible, comprenant :
- l'émission (S1) de signaux radar fournis par des émetteurs par des antennes d'émission (5) d'un réseau d'antennes (2) à entrées multiples et sorties multiples, MIMO, et la réception de signaux radar par des antennes de réception (6) du réseau d'antennes MIMO (2) à entrées multiples et sorties multiples fournis à des récepteurs ;
- la réalisation (S2), dans une unité numérique (4) comprenant une unité de multiplication (25), d'une multiplication complexe à base de trames du signal reçu complexe par le conjugué du signal d'émission complexe dans le domaine fréquentiel pour extraire des formes d'ondes d'émission de différentes antennes d'émission (5) au niveau de chaque récepteur pour générer une matrice de signal radar, RSM ; et
- la réalisation (S3) d'un traitement de signal radar par transformation de Fourier rapide du RSM généré, pour calculer des paramètres de cible de la cible,
dans lequel, dans le domaine fréquentiel, une multiplication complexe à base de trames du signal reçu complexe par le conjugué du signal d'émission complexe pour chaque récepteur est réalisée pour générer le RSM, écrit dans une mémoire de données (26-1) d'une unité de traitement de signal FFT à transformée de Fourier rapide (26) qui effectue le traitement de signal radar FFT pour calculer les paramètres de cible de la cible,
dans lequel une unité de mappage d'antennes (29) fournit dans le domaine fréquentiel à l'unité de multiplication (25) les signaux d'émission complexes mappés et dans lequel une unité de démappage de sous-porteuse (24) fournit dans le domaine fréquentiel à l'unité de multiplication (25) les signaux reçus complexes,
**caractérisé par**
**le fait que** la matrice de signal radar RSM est une matrice de signal radar quadridimensionnelle 4D-RSM de taille N_{TX} x N_{RX} x N x M, où N_{TX} est le nombre d'antennes d'émission (5, 5-i), N_{RX} le nombre d'antennes de réception (6, 6-i), N le nombre de sous-porteuses et M le nombre de symboles présents dans une trame,
un traitement de signal radar FFT quadridimensionnel étant appliqué pour calculer des paramètres de cible d'une cible, et
l'unité de traitement de signal FFT à transformée de Fourier rapide (26) est une unité de traitement de signal FFT à transformée de Fourier rapide 4D (26).

13. Procédé selon la revendication 12, dans lequel les paramètres de cible comprennent une distance, un angle d'azimut, un angle d'élévation et une vitesse de la cible réfléchissant les signaux radar émis par les antennes d'émission du réseau d'antennes MIMO (2).
